# EUROPEAN PATENT SPECIFICATION

(11) **EP 3 564 731 B1**
(45) Date of publication and mention of the grant of the patent: **09.09.2020**
(21) Application number: 18756597.3
(22) Date of filing: 26.02.2018
(51) Int. Cl.: G02B 27/01, G06F 3/01, G02B 27/00, G02B 27/14

(54) **VIRTUAL REALITY HEAD-MOUNTED APPARATUS**
KOPFMONTIERTE VORRICHTUNG FÜR VIRTUELLE REALITÄT
APPAREIL DE RÉALITÉ VIRTUELLE MONTÉ SUR LA TÊTE

(30) Priority: 27.02.2017 CN 201710108672
(43) Date of publication of application: 06.11.2019
(73) Proprietor: Alibaba Group Holding Limited, Grand Cayman (KY)
(72) Inventor: YIN, Huanmi, Hangzhou Zhejiang 311121 (CN); ZHANG, Hong, Hangzhou Zhejiang 311121 (CN); LIN, Feng, Hangzhou Zhejiang 311121 (CN); WU, Jun, Hangzhou Zhejiang 311121 (CN)
(74) Representative: Branderhorst, Matthijs Pieter Arie
(86) International application number: PCT/CN2018/077281
(87) International publication number: WO 2018/153368

(56) References cited:
- CN-A- 103 293 673
- CN-A- 104 407 440
- CN-A- 105 718 046
- CN-A- 105 955 491
- CN-A- 106 214 118
- CN-A- 106 406 509
- CN-A- 106 406 543
- CN-A- 106 932 904
- CN-U- 205 594 581
- CN-U- 205 942 608
- CN-U- 206 573 783
- US-A- 6 043 799
- US-A1- 2016 246 055
- US-A1- 2017 038 834

## Description

### TECHNICAL FIELD

This application relates to the technical field of virtual reality, and in particular, to a virtual reality head-mounted apparatus.

### BACKGROUND

Virtual reality (VR) technology is a technology that comprehensively utilizes a computer graphics system and various control interfaces to generate an interactive three-dimensional interaction environment on a computer to provide users with immersive experience. In related art, a user may wear a VR head-mounted apparatus, such as VR glasses or a VR helmet, or another VR apparatus, to obtain corresponding VR experience.

However, due to unique characteristics of VR scenarios, technical solutions for traditional electronic devices such as mobile phones or PCs may not be applicable to VR scenarios. For example, to acquire an infrared image of an eye of a user wearing a VR apparatus, due to structural limitations within the VR apparatus, image acquisition conditions for conventional methods may be difficult to meet, resulting in difficulties to successfully complete the corresponding tasks such as biometric recognition, eye tracking, etc.

US 2017/038834 A1 discloses a head mounted display used in a state of being mounted on a user's head and includes a convex lens disposed at a position facing the user's cornea when the head mounted display is mounted.

US 2016/246055 A1 relates to mounting electronics and optical systems in head-worn see-through computer displays.

CN 205594581 U discloses a video glasses module for eyeball tracking.

### SUMMARY

The invention provides a VR head-mounted apparatus as set out in the accompanying claims.

### BRIEF DESCRIPTION OF THE DRAWINGS

FIG. 1 is a side cross-sectional view of a VR helmet provided by an exemplary embodiment of this application.
FIG. 2 is a 3-D structural diagram of a VR helmet provided by an exemplary embodiment of this application.
FIG. 3 is a 3-D structural diagram of another VR helmet provided by an exemplary embodiment of this application.
FIG. 4 is a 3-D structural diagram of yet another VR helmet provided by an exemplary embodiment of this application.
FIG. 5 is a side cross-sectional view of another VR helmet provided by an exemplary embodiment of this application.
FIG. 6 is a structural diagram of a VR helmet, observed from a wearer's direction, provided by an exemplary embodiment of this application.
FIG. 7 is a schematic diagram of a positional relationship between an infrared light source and a convex lens provided by an exemplary embodiment of this application.
FIG. 8 is a side cross-sectional view of yet another VR helmet provided by an exemplary embodiment of this application.

### DETAILED DESCRIPTION OF THE INVENTION

The following embodiments are provided, using a VR helmet as an example, to introduce the related structure of a VR head-mounted apparatus of this application.

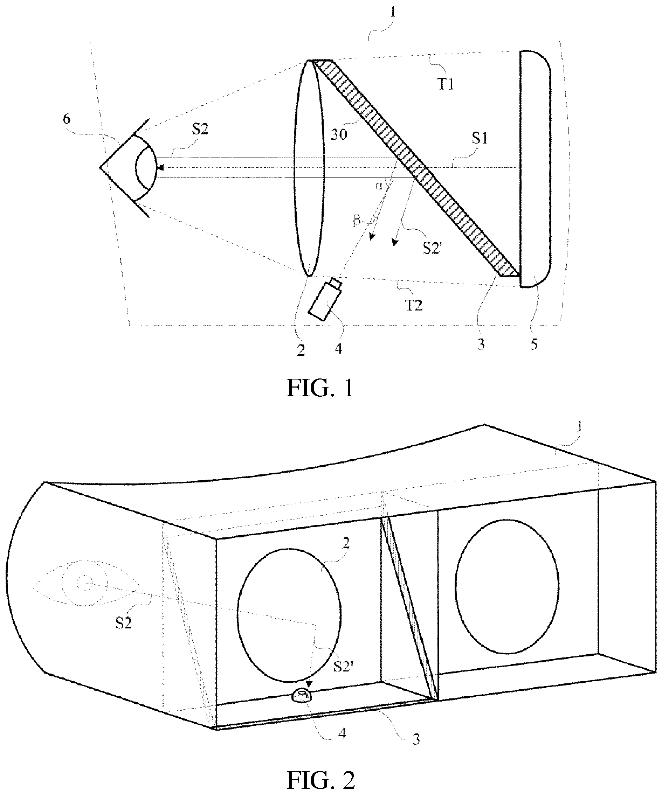

FIG. 1 is a side cross-sectional view of a VR helmet provided by an exemplary embodiment of this application. As shown in FIG. 1, the VR helmet may include: an apparatus body 1. The apparatus body 1 may include a convex lens 2 and a VR playing component 5. Further, the apparatus body 1 may further include a partial-reflection partial-transmission lens 3 for reflecting infrared light. The partial-reflection partial-transmission lens 3 is located on a side of the convex lens 2 away from a user (i.e., the partial-reflection partial-transmission lens 3 is located between the convex lens 2 and the VR playing component 5). Since the partial-reflection partial-transmission lens 3 has a high transmittance for visible light (relative to infrared light) and a low transmittance for infrared light (relative to visible light), VR display content played by the VR playing component 5 may, in a form of visible light S1, go through the partial-reflection partial-transmission lens 3 almost unaffected, and an eye 6 of the user receives the visible light S1 to view the VR display content. Infrared light S2 emitted from the eye 6 of the user is mostly, if not completely, reflected by the partial-reflection partial-transmission lens 3. The reflected infrared light S2' is acquired by a camera 4 located between the convex lens 2 and the partial-reflection partial-transmission lens 3, and the reflected infrared light S2' may form an infrared image of the eye 6, so as to achieve functions such as eye tracking and iris recognition. The camera 4 may be an infrared radiation (IR) camera or a red-green-blue (RGB)-IR integrated camera, which is not limited in this application. The camera 4 may include a variable-focus functional component that enables the camera 4 to achieve auto-focusing during image acquisition, thereby performing an acquisition operation on an infrared image of the eye 6 more quickly and accurately.

In this embodiment, the partial-reflection partial-transmission lens 3 for reflecting infrared light refers to a lens having a low transmittance for an infrared spectrum and a high transmittance for other spectra (e.g., visible light). By blocking most, if not all, of light in the low-transmittance infrared spectrum, the partial-reflection partial-transmission lens 3 reflects light in the infrared spectrum (i.e., "partial-reflection"). Meanwhile, most, if not all, of light in other spectra such as high-transmittance visible light can be transmitted through the partial-reflection partial-transmission lens 3, minimizing the impact of the partial-reflection partial-transmission lens 3 on light in other spectra such as visible light (i.e., "partial-transmission").

For example, the aforementioned partial-reflection partial-transmission lens 3 for reflecting infrared light may be an infrared dichroic mirror, such that a visible spectrum may be almost completely transmitted and an infrared spectrum may be almost completely reflected. Specifically, in one case, an infrared reflective film such as a TiO2-Ag-TiO2 infrared reflective film or a ZnS-Ag-ZnS infrared reflective film may be coated on a surface of an optical lens of high light transmittance for visible light (the visible spectrum may be almost completely transmitted), thereby forming the infrared dichroic mirror. In another example, a lens may be entirely made of the aforementioned infrared reflective film or a similar preparation material to form the infrared dichroic mirror.

More specifically, a lens surface 30 of the partial-reflection partial-transmission lens 3 is disposed obliquely, and positions of the partial-reflection partial-transmission lens 3 and the camera 4 may be arranged, such that the lens surface 30 of the partial-reflection partial-transmission lens 3 can obliquely reflect the infrared light S2 corresponding to the infrared image of the eye 6 towards the camera 4 to form the reflected infrared light S2'. Then, assuming that an angle α between the camera 4 and the infrared light S2 is maintained, and since the lens surface 30 of the partial-reflection partial-transmission lens 3 is disposed obliquely, the infrared light S2 is reflected toward the camera 4 to form the reflected infrared light S2', such that an angle β between the camera 4 and the reflected infrared light S2' is inevitably smaller than the aforementioned angle α. That reduces the possible deformation and distortion of the infrared image of an eye acquired by the camera 4, which helps to improve the acquisition accuracy for the infrared image of the eye 6, and to further improve the accuracy and precision of subsequent processing such as iris recognition and eye tracking.

In an actual case, inclination angles of the partial-reflection partial-transmission lens 3 and the camera 4 may be determined according to an internal space of the apparatus body 1. For example, the inclination angle of the partial-reflection partial-transmission lens 3 may be 45°, and a pointing direction of a lens of the camera 4 may be perpendicular or substantially perpendicular to the partial-reflection partial-transmission lens 3, which is not limited in this application.

Additionally, since the camera 4 is located between the convex lens 2 and the VR playing component 5, that is, an installation position of the camera 4 is located on a propagation line of the visible light S1, the installation position of the camera 4 may be properly limited to avoid blocking the visible light S1. For example, as shown in FIG. 1, the camera 4 may be located, to the fullest extent possible, further away from a display area (for example, the display area may be indicated by an upper boundary T1 and a lower boundary T2 shown in FIG. 1) of the VR playing component 5 (i.e., a VR display component in the VR head-mounted apparatus) with respect to the convex lens 2.

When the relative positional relationship among the convex lens 2, the partial-reflection partial-transmission lens 3, the camera 4, and the VR playing component 5 remains unchanged, the partial-reflection partial-transmission lens 3 and the camera 4 may have various installation modes in the VR helmet, which will be described in the following examples.

In one embodiment, as shown in FIG. 2, when the partial-reflection partial-transmission lens 3 has a plate shape, the lens surface of the partial-reflection partial-transmission lens 3 may be inclined obliquely downward. For example, within a space between the convex lens 2 and the VR playing component 5, the partial-reflection partial-transmission lens 3 may have its upper edge abut against a top inner side of the space, and its lower edge abut against a bottom outer side of the space. The camera 4 may be located at a bottom of the apparatus body 1, and the lens of the camera 4 may be disposed obliquely upward to acquire the reflected infrared light S2' reflected by the partial-reflection partial-transmission lens 3. Although in a vertical direction, in order to avoid blocking the visible light S1, the camera 4 has to be located outside the aforementioned display area and cannot be at the same height as the eye 6, in a horizontal direction (a direction perpendicular to the paper in FIG. 1), a horizontal angle between the lens of the camera 4 and the infrared light S2 (or reflected infrared light S2') can be reduced, if not eliminated. For example, as shown in FIG. 2, since the eye 6 of the user is usually located at the middle of the convex lens 2 in the horizontal direction, the camera 4 may be located at the middle of the convex lens 2 in the horizontal direction, thereby reducing the probability that an infrared image of an eye is deformed or distorted.

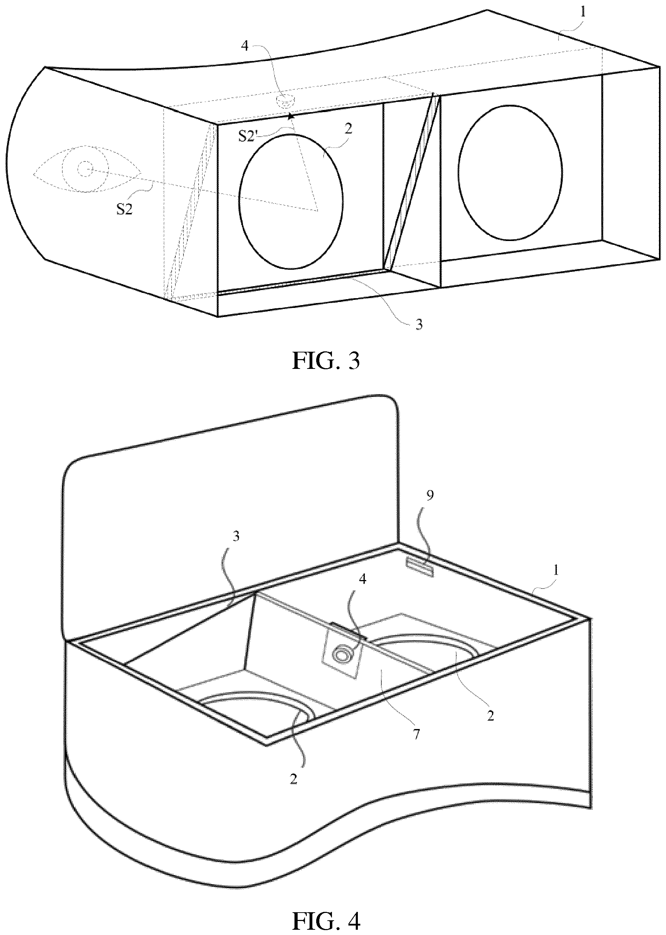

In another embodiment, as shown in FIG. 3, when the partial-reflection partial-transmission lens 3 has a plate shape, the lens surface of the partial-reflection partial-transmission lens 3 may be inclined obliquely upward. For example, within a space between the convex lens 2 and the VR playing component 5, the partial-reflection partial-transmission lens 3 may have its upper edge abut against a top outer side of the space, and its lower edge abut against a bottom inner side of the space. The camera 4 is located at a top of the apparatus body 1, and the lens of the camera 4 may be disposed obliquely downward to acquire the reflected infrared light S2' reflected by the partial-reflection partial-transmission lens 3. Then, similarly to the embodiment shown in FIG. 2, the camera 4 may also be located at the middle of the convex lens 2 in the horizontal direction to reduce, if not eliminate, the horizontal angle with the reflected infrared light S2', thereby reducing the probability that an infrared image of an eye is deformed or distorted.

In yet another embodiment, as shown in FIG. 4, when the apparatus body 1 includes two convex lenses 2 (corresponding to two eyes of the user respectively), the partial-reflection partial-transmission lens 3 may be provided for at least one convex lens 2 for performing infrared image reflection and acquisition on the corresponding eye of the user. For example, in FIG. 4, the partial-reflection partial-transmission lens 3 is provided only for a right convex lens 2 corresponding to a right eye of the user, and not for a left convex lens 2 corresponding to a left eye of the user. When the partial-reflection partial-transmission lens 3 has a plate shape, the lens surface of the partial-reflection partial-transmission lens 3 may be inclined horizontally towards the two convex lenses 2, and the camera 4 is located between the two convex lenses 2. For example, in FIG. 4, the partial-reflection partial-transmission lens 3 is provided for the right eye of the user. Within a space between the convex lens 2 and the VR playing component 5, the partial-reflection partial-transmission lens 3 may have its right side abut against a right interior of the space, and its left side abut against a left exterior of the space. That is, the lens surface of the partial-reflection partial-transmission lens 3 is inclined leftward, and the lens of the camera 4 is disposed in a left-to-right orientation to acquire the reflected infrared light S2' from the partial-reflection partial-transmission lens 3.

More specifically, the apparatus body 1 may include a baffle 7. The baffle 7 is located on a side of the convex lens 2 away from the user, and located between the two convex lenses 2 in the apparatus body 1. In order to adapt to a cuboid space inside the apparatus body 1, the partial-reflection partial-transmission lens 3 may be rectangular. To install the partial-reflection partial-transmission lens 3, two side edges of the partial-reflection partial-transmission lens 3 in the horizontal direction may abut against the baffle 7 and an inner wall of the apparatus body 1 respectively. The camera 4 may be installed on a side surface of the baffle 7 and face the lens surface of the partial-reflection partial-transmission lens 3.

In the aforementioned embodiment of this application, since the VR helmet needs to provide the user with an immersive VR scenario and user experience, the entrance of external light should be minimized. Therefore it may be difficult to satisfy the image acquisition condition of the camera 4 for the eye since light conditions inside the apparatus body 1 are poor after the user wears the VR helmet. To address this issue, this application further proposes the following technical solutions based on the aforementioned embodiments.

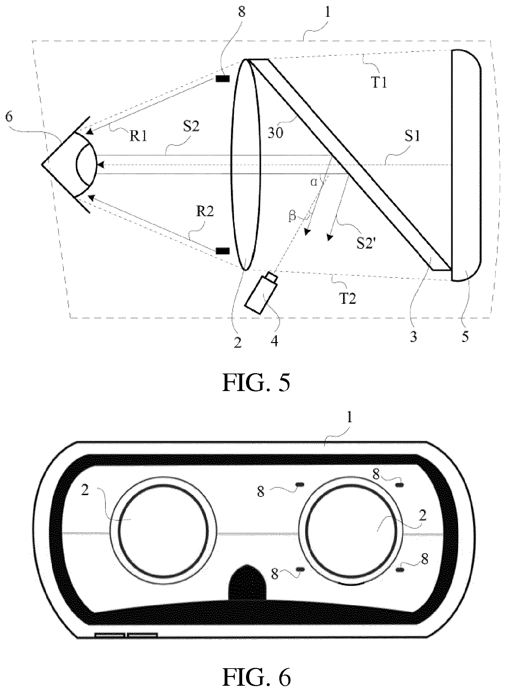

The VR helmet of this application, as shown in FIG. 5, may further include an infrared light source 8 provided in the apparatus body 1. The infrared light source 8 is distributed at a periphery of at least one convex lens 2, and provides infrared light compensation (the infrared light source 8 emits infrared light such as R1 and R2 to the eye 6, as shown in FIG. 5) on an eye 6 of the user corresponding to the at least one convex lens 2. As shown in FIG. 6, the VR helmet is usually configured with two convex lenses 2 corresponding to the eyes of a user. The infrared light source 8 may be distributed at a periphery of one single convex lens 2. For example, the infrared light source may be distributed at a periphery of a right convex lens 2 in FIG. 6 to provide infrared light compensation on the right eye of the user, and not distributed at a periphery of a left convex lens 2. Certainly, in other embodiments, an infrared light source 8 may be simultaneously disposed at peripheries of the two convex lenses 2 for infrared light compensation. Detail implementation is not limited in this application.

In fact, in the VR helmet, positions of the infrared light source 8, the camera 4, and the partial-reflection partial-transmission lens 3 are related with each other. For example, as shown in FIG. 6, to perform eye tracking, iris recognition, etc. on the right eye of the user, at least one infrared light source 8 may be disposed at the periphery of the right convex lens 2. Moreover, the partial-reflection partial-transmission lens 3 and the camera 4 may be provided at a side of the right convex lens 2 away from the user to achieve corresponding infrared image acquisition. Similarly, to perform eye tracking, iris recognition, etc. on both eyes of the user, infrared light sources 8 may be disposed at the peripheries of the two convex lenses 2 simultaneously, and the partial-reflection partial-transmission lens 3 and the camera 4 may be provided at a side of each convex lens 2 away from the user to achieve corresponding infrared image acquisition.

Although the embodiment shown in FIG. 6 has four infrared light sources 8 distributed at a periphery of the right convex lens 2, it is only used as an example here. In fact, in the VR helmet of this application, one or more infrared light sources 8 may be distributed at a periphery of each convex lens. The number of infrared light sources 8 is not limited in this application. When there exist multiple infrared light sources 8 (e.g., when four infrared light sources 8 are distributed at a periphery of the right convex lens 2 as shown in FIG. 6), these infrared light sources 8 may be, to the fullest extent possible, uniformly distributed to provide uniform light compensation for the eye 6.

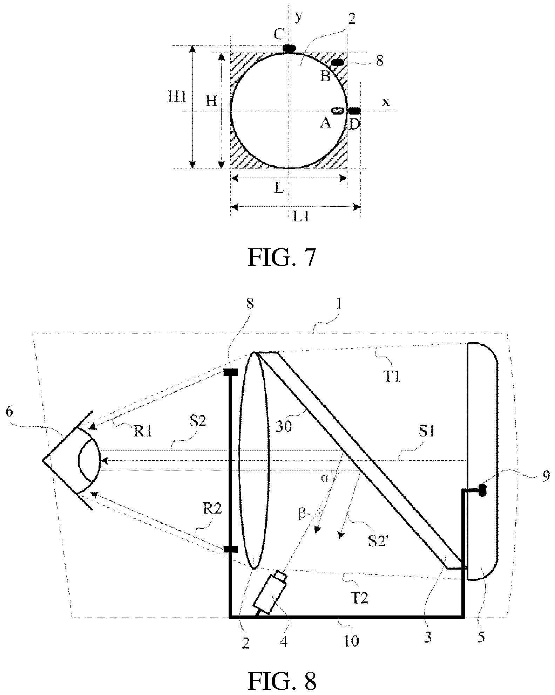

Additionally, when the apparatus body 1 includes the convex lens 2, an external size of the apparatus body 1 is related to the space occupation of the convex lens 2. For example, as shown in FIG. 7, assuming the convex lens 2 has a length of L in a horizontal direction (i.e., x-axis direction in FIG. 7), and a length of H in a vertical direction (i.e., y-axis direction in FIG. 7, when the convex lens 2 is a circle, L and H are equal to a diameter length of the circle). Then, the space occupation of the convex lens 2 for the apparatus body 1 is related to values of L and H. That is, the apparatus body 1 may have a length of at least L in the horizontal direction, and a length of at least H in the vertical direction. In fact, when the apparatus body 1 has a substantially rectangular parallelepiped shape, an external size of the apparatus body 1 required by the convex lens 2 is substantially the same as the external size of the apparatus body 1 required by a circumscribed rectangle (as shown in FIG. 7, the circumscribed rectangle has a horizontal width of L and a vertical height of H) of the convex lens 2.

In one embodiment, as shown in FIG. 7, when an installation position of the infrared light source 8 is located within a coverage area of the circumscribed rectangle of the convex lens 2, since the infrared light source 8 needs to avoid blocking the convex lens 2, the infrared light source 8 should not be located within the convex lens 2 (e.g., point A), but should be located within a shaded area (e.g., point B) shown in FIG. 7. In this case, a space needed by the apparatus body 1 that has the infrared light source 8 may overlap with the circumscribed rectangle (or the convex lens 2 itself), so that the infrared light source 8 does not require additional space from the apparatus body 1. That helps to control or even reduce the size of the apparatus body 1 and the VR helmet, and prevent the VR helmet from being too bulky and cumbersome.

In another embodiment, as shown in FIG. 7, when the infrared light source 8 is located at point C, an overall height of a combination of the infrared light source 8 and the convex lens 2 in the vertical direction increases from H to HI. That is, a space occupation requirement for the apparatus body 1 in the vertical direction increases from H to HI, and the VR helmet becomes thicker. Similarly, when the infrared light source 8 is located at point D, an overall width of a combination of the infrared light source 8 and the convex lens 2 in the horizontal direction increases from L to L1. That is, a space occupation requirement for the apparatus body 1 in the horizontal direction increases from L to L1, and the VR helmet becomes wider.

Therefore, to the fullest extent possible, the infrared light source 8 can be provided within the coverage area of the circumscribed rectangle of the corresponding convex lens 2 to avoid increasing the space occupation requirement for the apparatus body 1, and to help control the space occupied by the VR helmet.

FIG. 8 is a side cross-sectional view of another VR helmet provided by an exemplary embodiment of this application. As shown in FIG. 8, the VR helmet may be a split-style VR head-mounted apparatus, and the apparatus body 1 of the VR helmet may comprise an apparatus interface 9, so that the apparatus interface 9 may be electrically connected to an electronic device such as a mobile phone or a tablet installed in the apparatus body 1. By using a processor or a graphics card chip, etc. for rendering, and using a screen component for content displaying, the electronic device may work as the VR playing component 5 in the apparatus body 1.

Further, the camera 4 and the infrared light source 8 in the apparatus body 1 may be connected to the apparatus interface 9 through a data line 10, so that when the electronic device connected to the apparatus interface 9 issues a switch control instruction, the camera 4 and the infrared light source 8 may receive the switch control instruction through the apparatus interface 9 and the data line 10 to perform a state switching operation in response to the switch control instruction. In other words, based on the user control to the electronic device or an application program running on the electronic device, the electronic device may send a switch control instruction to the camera 4 and the infrared light source 8, thereby controlling the infrared light source 8 to provide infrared light compensation on the eye 6 and controlling the camera 4 to perform infrared image acquisition on the eye 6. That improves the controllability of infrared light compensation and infrared image acquisition.

The switch control instruction may be sent to the camera 4 and the infrared light source 8 simultaneously. Alternatively, the switch control instruction may also be separately sent to the camera 4 or the infrared light source 8. For example, the instruction may separately control the camera 4 to perform infrared image acquisition, and separately control the infrared light source 8 to provide infrared light compensation in case of poor light condition.

Additionally, after the camera 4 completes the infrared image acquisition, if the VR helmet comprises a processing module, the acquired infrared image may be transmitted to the processing module for processing. Alternatively, the camera 4 may transmit, through the apparatus interface 9 and the data line 10, the acquired infrared image to the aforementioned electronic device for processing by the electronic device.

Certainly, the VR helmet of this application may include other forms of VR head-mounted apparatuses other than the split-style VR head-mounted apparatus paired with an electronic device such as a mobile phone. For example, for the split-style VR head-mounted apparatus, the VR helmet may be paired with a PC host, a game console or another external apparatus, so the VR playing component 5 may be a display component built into the VR helmet, and the external apparatus is used for rendering VR display content. For another example, the VR helmet may be an integrated VR head-mounted apparatus. That is, the VR helmet may be able to play VR display content without resorting to any external apparatus. The VR playing component 5 is built-in in the VR helmet, and may have playing functions such as rendering and displaying of VR display content.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one......" does not exclude other same elements in the process, method, article or device which include the element.

Reference is made in detail to exemplary embodiments, examples of which are illustrated in the accompanying drawings. The above description refers to the accompanying drawings in which the same numbers in different drawings represent the same or similar elements unless otherwise represented. The implementations set forth in the above description of exemplary embodiments do not represent all implementations consistent with this application. Instead, they are merely examples of apparatuses and methods consistent with aspects related to this application as recited in the appended claims.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term "if' as used herein may be interpreted as "when ..." or "upon ..." or "in response to determining."

## Claims

1. A virtual reality, VR, head-mounted apparatus, comprising:
an apparatus body (1), the apparatus body (1) comprising a convex lens (2), a camera (4) and a partial-reflection partial-transmission lens (3) for reflecting infrared light, the partial-reflection partial-transmission lens (3) being located on a side of the convex lens (2) away from a user within a space between the convex lens (2) and a VR playing component (5), the camera (4) being located between the convex lens and the partial-reflection partial-transmission lens (3), and a lens surface of the partial-reflection partial-transmission lens (3) being disposed obliquely, such that an infrared image of an eye of the user is obliquely reflected to the camera; and
an infrared light source (8) provided in the apparatus body, the infrared light source being located on a side of the convex lens (2) close to the user, and arranged to provide infrared light to an eye of the user, wherein the infrared light source (8) is distributed at a periphery of the convex lens (2) within a coverage area of a circumscribed rectangle of the convex lens (2), and
wherein the partial-reflection partial-transmission lens (3) has an upper edge abut against a top inner side of the space and a lower edge abut against a bottom outer side of the space, or an upper edge abut against a top outer side of the space and a lower edge abut against a bottom inner side of the space.

2. The apparatus according to claim 1, wherein the partial-reflection partial-transmission lens (3) has a high transmittance for visible light and a low transmittance for infrared light.

3. The apparatus according to claim 1, wherein the partial-reflection partial-transmission lens (3) comprises an infrared dichroic mirror.

4. The apparatus according to claim 1, wherein the camera (4) is located outside a display area of the VR playing component (5) in the VR head-mounted apparatus with respect to the convex lens (2).

5. The apparatus according to claim 1, wherein the partial-reflection partial-transmission lens (3) has a plate shape, the lens surface (30) of the partial-reflection partial-transmission lens (3) is inclined obliquely downward, the camera (4) is located at a bottom of the apparatus body (1), and a lens of the camera (4) is disposed obliquely upward.

6. The apparatus according to claim 1, wherein the partial-reflection partial-transmission lens (3) has a plate shape, the lens surface (30) of the partial-reflection partial-transmission lens (3) is inclined obliquely upward, the camera (4) is located at a top of the apparatus body (1), and a lens of the camera is disposed obliquely downward.

7. The apparatus according to claim 1, wherein the apparatus body (1) comprises two convex lenses, the partial-reflection partial-transmission lens (3) is provided for at least one of the two convex lenses, and the partial-reflection partial-transmission lens (3) has a plate shape, the lens surface of the partial-reflection partial-transmission lens is horizontally inclined towards the two convex lenses, and the camera is located between the two convex lenses.

8. The apparatus according to claim 7, wherein the apparatus body comprises a baffle (7), the baffle is located on a side of the convex lens (2) away from the user, and located between the two convex lenses in the apparatus body; the partial-reflection partial-transmission lens is rectangular, two side edges of the partial-reflection partial-transmission lens in a horizontal direction abut against the baffle and an inner wall of the apparatus body respectively; and the camera is installed on a side surface of the baffle.

9. The apparatus according to claim 1, further comprising:
an apparatus interface (9) provided on the apparatus body (1), the apparatus interface being electrically connected to an electronic device installed in the apparatus body, the electronic device being used to play VR display content,
the camera (4) and the infrared light source (8) being connected to the apparatus interface (9) through a data line (10), wherein upon receiving a switch control instruction transmitted by the electronic device through the apparatus interface and the data line, the camera (4) and the infrared light source (8) are configured to perform a state switching operation in response to the switch control instruction, and the camera (4) is further configured to transmit an acquired infrared image to the electronic device through the apparatus interface (9) and the data line (10).

## Patentansprüche

1. Kopfmontiertes Gerät für virtuelle Realität, VR, umfassend:
einen Gerätekörper (1), der Gerätekörper (1) umfassend eine konvexe Linse (2), eine Kamera (4) und eine Linse mit teilweiser Reflexion und teilweiser Durchlässigkeit (3) zum Reflektieren von Infrarotlicht, wobei die Linse mit teilweiser Reflexion und teilweiser Durchlässigkeit (3) an einer Seite der konvexen Linse (2) weg von einem Benutzer in einem Raum zwischen der konvexen Linse (2) und einer VR-Wiedergabekomponente (5) angeordnet ist, wobei die Kamera (4) zwischen der konvexen Linse und der Linse mit teilweiser Reflexion und teilweiser Durchlässigkeit (3) angeordnet ist, und wobei eine Linsenoberfläche der Linse mit teilweiser Reflexion und teilweiser Durchlässigkeit (3) schräg angeordnet ist, so dass ein Infrarotbild eines Auges des Benutzers schräg zu der Kamera reflektiert wird; und
eine Infrarotlichtquelle (8), bereitgestellt in dem Gerätekörper, wobei die Infrarotlichtquelle an einer Seite der konvexen Linse (2) nahe dem Benutzer angeordnet ist und ausgelegt ist zum Bereitstellen von Infrarotlicht zu einem Auge des Benutzers, wobei die Infrarotlichtquelle (8) an einer Peripherie der konvexen Linse (2) innerhalb eines Abdeckungsbereichs eines umschriebenen Rechtecks der konvexen Linse (2) verteilt ist, und
wobei die Linse mit teilweiser Reflexion und teilweiser Durchlässigkeit (3) eine obere Kante, die gegen eine innere Oberseite des Raums stößt, und eine untere Kante, die gegen eine äußere Unterseite des Raums stößt, oder eine obere Kante, die gegen eine äußere Oberseite des Raums stößt, und eine untere Kante, die gegen eine innere Unterseite des Raums stößt, aufweist.

2. Gerät nach Anspruch 1, wobei die Linse mit teilweiser Reflexion und teilweiser Durchlässigkeit (3) eine hohe Durchlässigkeit für sichtbares Licht und eine niedrige Durchlässigkeit für Infrarotlicht aufweist.

3. Gerät nach Anspruch 1, wobei die Linse mit teilweiser Reflexion und teilweiser Durchlässigkeit (3) einen infrarotdichroitischen Spiegel umfasst.

4. Gerät nach Anspruch 1, wobei die Kamera (4) außerhalb eines Anzeigebereichs der VR-Wiedergabekomponente (5) in dem kopfmontierten VR-Gerät in Bezug auf die konvexe Linse (2) angeordnet ist.

5. Gerät nach Anspruch 1, wobei die Linse mit teilweiser Reflexion und teilweiser Durchlässigkeit (3) eine Plattenform aufweist, die Linsenoberfläche (30) der Linse mit teilweiser Reflexion und teilweiser Durchlässigkeit (3) schräg nach unten geneigt ist, die Kamera (4) an einer Unterseite des Gerätekörpers (1) angeordnet ist und eine Linse der Kamera (4) schräg nach oben angeordnet ist.

6. Gerät nach Anspruch 1, wobei die Linse mit teilweiser Reflexion und teilweiser Durchlässigkeit (3) eine Plattenform aufweist, die Linsenoberfläche (30) der Linse mit teilweiser Reflexion und teilweiser Durchlässigkeit (3) schräg nach oben geneigt ist, die Kamera (4) an einer Oberseite des Gerätekörpers (1) angeordnet ist und eine Linse der Kamera schräg nach unten angeordnet ist.

7. Gerät nach Anspruch 1, wobei der Gerätekörper (1) zwei konvexe Linsen umfasst, die Linse mit teilweiser Reflexion und teilweiser Durchlässigkeit (3) für mindestens eine der zwei konvexen Linsen bereitgestellt ist und die Linse mit teilweiser Reflexion und teilweiser Durchlässigkeit (3) eine Plattenform aufweist, die Linsenoberfläche der Linse mit teilweiser Reflexion und teilweiser Durchlässigkeit horizontal hin zu den zwei konvexen Linsen geneigt ist und die Kamera zwischen den zwei konvexen Linsen angeordnet ist.

8. Gerät nach Anspruch 7, wobei der Gerätekörper eine Streulichtblende (7) umfasst, die Streulichtblende an einer Seite der konvexen Linse (2) weg von dem Benutzer angeordnet ist und zwischen den zwei konvexen Linsen in dem Gerätekörper angeordnet ist; die Linse mit teilweiser Reflexion und teilweiser Durchlässigkeit rechteckig ist, zwei Seitenkanten der Linse mit teilweiser Reflexion und teilweiser Durchlässigkeit in einer horizontalen Richtung jeweils gegen die Streulichtblende und eine innere Wand des Gerätekörpers stoßen; und die Kamera an einer Seitenoberfläche der Streulichtblende installiert ist.

9. Gerät nach Anspruch 1, ferner umfassend:
eine Geräteschnittstelle (9), bereitgestellt an dem Gerätekörper (1), wobei die Geräteschnittstelle mit einer in dem Gerätekörper installierten elektronischen Vorrichtung elektrisch verbunden ist, wobei die elektronische Vorrichtung zur Wiedergabe von VR-Anzeigeinhalt verwendet wird,
die Kamera (4) und die Infrarotlichtquelle (8) mit der Geräteschnittstelle (9) durch eine Datenleitung (10) verbunden sind, wobei nach Empfangen einer Umschaltsteuerungsanweisung, übertragen von der elektronischen Vorrichtung durch die Geräteschnittstelle und die Datenleitung, die Kamera (4) und die Infrarotlichtquelle (8) konfiguriert sind zum Durchführen einer Zustandsumschaltoperation als Reaktion auf die Umschaltsteuerungsanweisung, und die Kamera (4) ferner konfiguriert ist zum Übertragen eines erfassten Infrarotbilds an die elektronische Vorrichtung durch die Geräteschnittstelle (9) und die Datenleitung (10).

## Revendications

1. Appareil de réalité virtuelle, VR, monté sur la tête, comprenant :
un corps d'appareil (1), le corps d'appareil (1) comprenant une lentille convexe (2), une caméra (4) et une lentille à réflexion partielle et à transmission partielle (3) pour réfléchir la lumière infrarouge, la lentille à réflexion partielle et à transmission partielle (3) étant localisée sur un côté de la lentille convexe (2) à l'écart d'un utilisateur à l'intérieur d'un espace entre la lentille convexe (2) et un composant de lecture de VR (5), la caméra (4) étant localisée entre la lentille convexe et la lentille à réflexion partielle et à transmission partielle (3), et une surface de lentille de la lentille à réflexion partielle et à transmission partielle (3) étant disposée à l'oblique, de telle sorte qu'une image infrarouge d'un œil de l'utilisateur soit réfléchie à l'oblique sur la caméra ; et
une source de lumière infrarouge (8) qui est fournie dans le corps d'appareil, la source de lumière infrarouge étant localisée sur un côté de la lentille convexe (2) proche de l'utilisateur, et étant agencée pour fournir de la lumière infrarouge à un œil de l'utilisateur, dans lequel la source de lumière infrarouge (8) est distribuée au niveau d'une périphérie de la lentille convexe (2) à l'intérieur d'une zone de couverture d'un rectangle circonscrit de la lentille convexe (2) ; et
dans lequel la lentille à réflexion partielle et à transmission partielle (3) comporte un bord supérieur qui vient en butée contre un côté interne de sommet de l'espace et un bord inférieur qui vient en butée contre un côté externe de fond de l'espace, ou un bord supérieur qui vient en butée contre un côté externe de sommet de l'espace et un bord inférieur qui vient en butée contre un côté interne de fond de l'espace.

2. Appareil selon la revendication 1, dans lequel la lentille à réflexion partielle et à transmission partielle (3) présente une transmittance élevée pour la lumière visible et une transmittance faible pour la lumière infrarouge.

3. Appareil selon la revendication 1, dans lequel la lentille à réflexion partielle et à transmission partielle (3) comprend un miroir dichroïque infrarouge.

4. Appareil selon la revendication 1, dans lequel la caméra (4) est localisée à l'extérieur d'une zone d'affichage du composant de lecture de VR (5) dans l'appareil de VR monté sur la tête par rapport à la lentille convexe (2).

5. Appareil selon la revendication 1, dans lequel la lentille à réflexion partielle et à transmission partielle (3) présente une forme de plaque, la surface de lentille (30) de la lentille à réflexion partielle et à transmission partielle (3) est inclinée à l'oblique vers le bas, la caméra (4) est localisée au niveau d'un fond du corps d'appareil (1) et un objectif de la caméra (4) est disposé à l'oblique vers le haut.

6. Appareil selon la revendication 1, dans lequel la lentille à réflexion partielle et à transmission partielle (3) présente une forme de plaque, la surface de lentille (30) de la lentille à réflexion partielle et à transmission partielle (3) est inclinée à l'oblique vers le haut, la caméra (4) est localisée au niveau d'un sommet du corps d'appareil (1) et un objectif de la caméra est disposé à l'oblique vers le bas.

7. Appareil selon la revendication 1, dans lequel le corps d'appareil (1) comprend deux lentilles convexes, la lentille à réflexion partielle et à transmission partielle (3) est fournie pour au moins l'une des deux lentilles convexes, et la lentille à réflexion partielle et à transmission partielle (3) présente une forme de plaque, la surface de lentille de la lentille à réflexion partielle et à transmission partielle est inclinée horizontalement en direction des deux lentilles convexes, et la caméra est localisée entre les deux lentilles convexes.

8. Appareil selon la revendication 7, dans lequel le corps d'appareil comprend une cloison (7), la cloison est localisée sur un côté de la lentille convexe (2) à l'écart de l'utilisateur et est localisée entre les deux lentilles convexes dans le corps d'appareil ; la lentille à réflexion partielle et à transmission partielle est rectangulaire, deux bords latéraux de la lentille à réflexion partielle et à transmission partielle dans une direction horizontale viennent respectivement en butée contre la cloison et contre une paroi interne du corps d'appareil ; et la caméra est installée sur une surface latérale de la cloison.

9. Appareil selon la revendication 1, comprenant en outre :
une interface d'appareil (9) qui est fournie sur le corps d'appareil (1), l'interface d'appareil étant connectée électriquement à un dispositif électronique qui est installé dans le corps d'appareil, le dispositif électronique étant utilisé pour lire le contenu d'affichage de VR ;
la caméra (4) et la source de lumière infrarouge (8) étant connectées à l'interface d'appareil (9) par l'intermédiaire d'une ligne de données (10), dans lequel, suite à la réception d'une instruction de commande de commutation qui est transmise par le dispositif électronique par l'intermédiaire de l'interface d'appareil et de la ligne de données, la caméra (4) et la source de lumière infrarouge (8) sont configurées pour réaliser une opération de commutation d'état en réponse à l'instruction de commande de commutation, et la caméra (4) est en outre configurée pour transmettre une image infrarouge acquise au dispositif électronique par l'intermédiaire de l'interface d'appareil (9) et de la ligne de données (10).
